# EUROPÄISCHE PATENTSCHRIFT

(11) **EP 3 574 468 B1**
(45) Veröffentlichungstag und Bekanntmachung des Hinweises auf die Patenterteilung: **15.03.2023**
(21) Anmeldenummer: 18700886.7
(22) Anmeldetag: 15.01.2018
(51) Int. Cl.: G06Q 50/28

(54) **VERFAHREN UND VORRICHTUNG ZUM POLSTERN MINDESTENS EINES GEGENSTANDS IN EINEM BEHÄLTER**
METHOD AND APPARATUS FOR CUSHIONING AN OBJECT IN A CONTAINER
PROCÉDÉ ET APPAREIL DE REMBOURRAGE D'UN OBJET DANS UN RÉCIPIENT

(30) Priorität: 24.01.2017 DE 102017101324
(43) Veröffentlichungstag der Anmeldung: 04.12.2019
(73) Patentinhaber: Storopack Hans Reichenecker GmbH, 72555 Metzingen (DE)
(72) Erfinder: SLOVENCIK, Jean-Marc, 67350 Uhrwiller (FR); DEIS, Paul, 67250 Preuschdorf (FR)
(74) Vertreter: DREISS Patentanwälte PartG mbB
(86) Internationale Anmeldenummer: PCT/EP2018/050842
(87) Internationale Veröffentlichungsnummer: WO 2018/137951

(56) Entgegenhaltungen:
- US-A1- 2009 082 187
- Nn: "Dimensionieren, Wiegen und Scannen", , 3 November 2008 (2008-11-03), XP055771789, Retrieved from the Internet: URL:https://automationspraxis.industrie.de /allgemein/dimensionieren-wiegen-und-scann en/ [retrieved on 2021-02-03]
- Anonymous: "Label printer applicator - Wikipedia", , 24 June 2016 (2016-06-24), XP055887673, Retrieved from the Internet: URL:https://en.wikipedia.org/w/index.php?t itle=Label_printer_applicator&oldid=726837 006 [retrieved on 2022-02-04]

## Beschreibung

Die Erfindung betrifft ein Verfahren und eine Vorrichtung zum Polstern mindestens eines Gegenstands in einem Behälter, entsprechend den Oberbegriffen der beiden nebengeordneten Patentansprüche.

Sowohl vom Markt her als auch aus den Patentveröffentlichungen DE 10 2012 222 805 B3 und DE 10 2012 218 679 A1 ist es bekannt, in einem Behälter, beispielsweise einem Verpackungskarton vorhandene Gegenstände, die in dem Behälter transportiert werden sollen, mittels geknülltem Papier zu polstern. Das geknüllte Papier bildet ein Polsterkissen und wird in einer Polsterumformungseinrichtung aus einem bahnförmigen Ausgangsmaterial hergestellt. Nach der Herstellung wird das Polsterkissen oder werden die Polsterkissen von einer Person ("Packer") in den Behälter gelegt. Anzahl und Länge der Polsterkissen werden bei der Herstellung durch den Packer bestimmt, wobei die Bestimmung auf einer Abschätzung des im Behälter vorhandenen Leervolumens durch den Packer basiert. Vom Markt her ist es ferner bekannt, das Leervolumen in einem Behälter mittels einer Sensoreinrichtung zu erfassen und das Polstermittel abhängig von dem erfassten Leervolumen zu produzieren.

US 2009/0082187 A1 offenbart eine Verpackungsmaschine, welche ein bahnförmiges Lagermaterial in ein Packmaterial umwandelt, das relativ dicker und weniger dicht als das Lagermaterial ist, aber relativ dünn und flexibel genug ist, um als Schutzhülle zu fungieren. Die Verpackungsmaschine umfasst einen Zuführmechanismus, der ein blattförmiges Lagermaterial durch sie hindurch befördert, und einen Verbindungsmechanismus, der dem Zuführmechanismus nachgeschaltet ist.

Die vorliegende Erfindung hat die Aufgabe, ein Verfahren und eine Vorrichtung der eingangs genannten Art zu schaffen, die sehr einfach sind.

Diese Aufgabe wird erfindungsgemäß durch ein Verfahren und durch eine Vorrichtung mit den Merkmalen der nebengeordneten Patentansprüche gelöst. Vorteilhafte Weiterbildungen der Erfindung sind in Unteransprüchen angegeben. Darüber hinaus finden sich für die Erfindung wesentliche Merkmale auch in der nachfolgenden Beschreibung und in der beigefügten Zeichnung, wobei diese Merkmale sowohl in Alleinstellung als auch in unterschiedlichen Kombinationen erfindungswesentlich sein können.

Erfindungsgemäß wird ein Verfahren und eine Vorrichtung nach den unabhängigen Ansprüchen vorgeschlagen.

Erfindungsgemäß wurde erkannt, dass zahlreiche Verpackungsszenarien identisch sind. Ein Verpackungsszenario wird durch eine vorgegebene Kombination aus Behälter und Gegenstand charakterisiert. Meist wird dabei ein gleicher Gegenstand in einem gleichen Behälter angeordnet und transportiert. Ein Beispiel ist beispielsweise ein Computer-Bildschirm. Ein bestimmter Computer-Bildschirm (der meist ohnehin noch in einer eigenen Verpackung angeordnet ist) hat immer die gleichen Außenabmessungen und kann daher immer in dem gleichen Behälter, der immer die gleichen Maße aufweist, transportiert bzw. versandt werden, oder kann in unterschiedlichen Behältern transportiert werden, wobei das Leervolumen zwischen dem Computer-Bildschirm und dem jeweiligen Behälter dann vom Behälter abhängt.

Erfindungsgemäß wurde ferner erkannt, dass bei identischen Verpackungsszenarien auch identische Polstermittel eingesetzt werden können. Daher schlägt die Erfindung vor, dass für vorgegebene Verpackungsszenarien die erforderliche Menge an Polstermittel vorab ermittelt wird. Die "Menge" an Polstermittel kann dabei durch die Anzahl einzelner Polstermittel und/oder durch deren Größe definiert werden. Beispielsweise in einer Datenbank werden vorab ermittelten Mengen an Polstermittel und die dazugehörigen Verpackungsszenarien (Gegenstand + Behälter) abgespeichert.

Wird nun ein bestimmter Gegenstand in einem bestimmten Behälter angeordnet, wird beispielsweise aus der erwähnten Datenbank die diesem Verpackungsszenario entsprechende Menge an Polstermittel als Information in einem maschinenlesbaren, also ohne Zutun eines Benutzers lesbaren Informationsträger auf dem Behälter aufgebracht. Danach wird der Behälter mit dem darin befindlichen Gegenstand einer automatischen Leseeinrichtung für den Informationsträger zugeführt, welche die Information betreffend die erforderliche Menge an Polstermittel automatisch ausliest. Hierauf basierend wird ein Signal generiert, welches in einer Polstermittel-Bereitstellungseinrichtung dazu führt, dass die besagte erforderliche Menge an Polstermittel bereitgestellt wird. Dabei kann die besagte erforderliche Menge an Polstermittel auch vor Ort erst produziert werden.

Es ist somit in diesem Fall nicht mehr erforderlich, dass eine Person das im Behälter vorhandene Leervolumen abschätzt und basierend auf dieser Abschätzung die erforderliche Menge an Polstermittel bereitgestellt wird.

Auch ist es nicht erforderlich, anhand komplexer Sensoreinrichtungen das Leervolumen zu erfassen und basierend auf dieser Erfassung die erforderliche Menge an Polstermittel bereitzustellen. Stattdessen genügt das Auslesen der Information mittels der automatischen Leseeinrichtung, um die für das jeweilige Verpackungsszenario erforderliche Menge an Polstermittel bereitzustellen. Durch diese Vereinfachung werden anlagenseitig erhebliche Kosten gespart. Darüber hinaus kann auch eine wenig qualifizierte Person eingesetzt werden, wodurch auch Personalkosten gespart werden. Dabei wird eine optimale Polsterung des Gegenstands im Behälter sichergestellt.

Eine Weiterbildung des erfindungsgemäßen Verfahrens zeichnet sich dadurch aus, dass im Schritt a als Informationsträger ein Barcode erstellt und im Schritt d ein Barcode ausgelesen wird, oder dass im Schritt a die Information auf einen RFID-Tag gespeichert und im Schritt d der RFID-Tag ausgelesen wird. Sowohl ein Barcode als auch ein RFID-Tag sind robuste und preiswerte Informationsträger. Der Barcode kann dabei sowohl zunächst auf ein Etikett gedruckt und dann auf den Behälter geklebt werden, als auch direkt auf den Behälter gedruckt werden. Der Vorteil eines RFID-Tags besteht darin, dass dieser auch einfach in den Behälter eingelegt werden kann.

Besonders vorteilhaft ist es, wenn bei dem erfindungsgemäßen Verfahren im Schritt f ein Polstermittel bestehend aus geknülltem Papier bereitgestellt wird. Geknülltes Papier ist ressourcenschonend und kann sehr einfach vor Ort mittels einer Polsterumformungseinrichtung bereitgestellt werden, welche ein plattenförmiges Ausgangsmaterial in geknüllte Polsterkissen umgeformt. Dabei kann das bahnförmige Ausgangsmaterial sowohl auf einer Rolle aufgerolltes sein als auch beispielsweise als flaches Material im Zickzack-gefaltet sein.

Insbesondere bei vor Ort hergestellten Polsterkissen aus geknüllten Papier kann im Schritt a die Menge an geknülltem Papier durch eine Anzahl und/oder eine Länge einzelner aus geknülltem Papier bestehender Polsterkissen definiert werden. Dies ist sehr einfach realisierbar.

In nochmaliger Weiterbildung wird vorgeschlagen, dass im Schritt f mindestens zwei Polsterkissen bereitgestellt werden, die unterschiedlich lang sind. Damit können sehr individuelle Verpackungsszenarien bedient werden, also Gegenstände in einem Behälter sehr zuverlässig gepolstert werden.

Bei einer erfindungsgemäßen Vorrichtung ist es besonders vorteilhaft, wenn die Bereitstellungseinrichtung eine mobile Einrichtung ist. Hierdurch wird die Flexibilität in der Benutzung der erfindungsgemäßen Vorrichtung erhöht.

Nachfolgend wird eine Ausführungsform der Erfindung unter Bezugnahme auf die beiliegende Zeichnung erläutert. In der Zeichnung zeigen:
- Figur 1: eine schematische Darstellung, welche die Ermittlung vorab einer Menge an Polstermittel für drei unterschiedliche Verpackungsszenarien zeigt;
- Figur 2: eine schematische Darstellung, welche das Versehen eines Behälters mit einer ein erstes Verpackungsszenario von Figur 1 betreffenden Information zeigt;
- Figur 3: eine schematische Darstellung, welche eine Bereitstellung von Polstermittel für das Verpackungsszenario von Figur 2 zeigt;
- Figur 4: eine schematische Darstellung von Behälter, Gegenstand und Polstermittel des Verpackungsszenarios von Figur 2; und
- Figur 5: ein Flussdiagramm eines Verfahrens zum Polstern eines Gegenstands in einem Behälter.

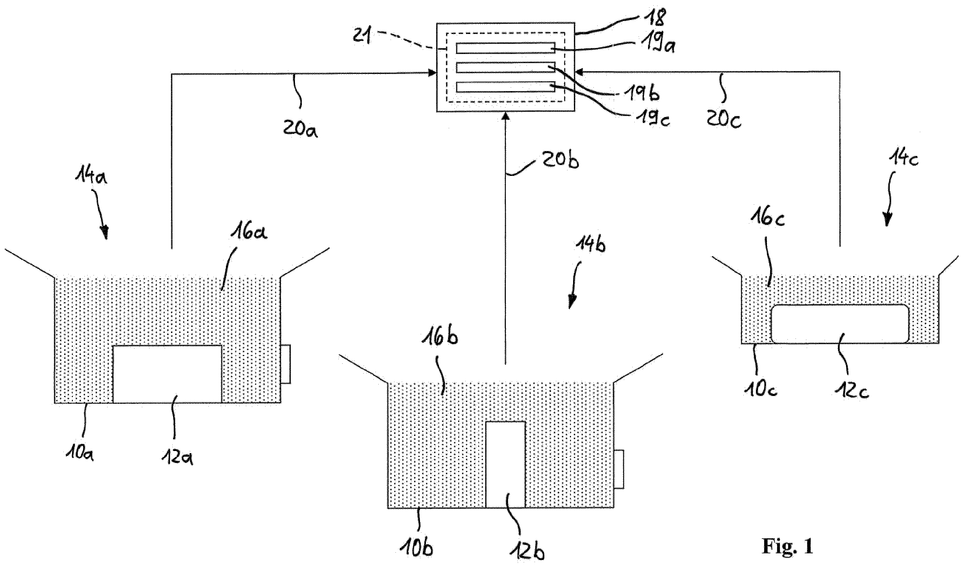

In Figur 1 tragen dargestellte Behälter die Bezugszeichen 10a, 10b und 10c. Es handelt sich bei diesen Behältern beispielsweise um Behälter aus Kartonmaterial, wie sie von Versandhäusern zum Versenden von bestellten Artikeln eingesetzt werden. Grundsätzlich können die Behälter aber auch Behälter aus Kunststoff oder aus einem anderen Material sein. Man erkennt, dass die Behälter 10a und 10b identisch sind, wohingegen der Behälter 10c breiter und weniger hoch ist als die Behälter 10a und 10b.

In den Behältern ist jeweils ein Gegenstand 12a, 12b beziehungsweise 12c angeordnet. Zwar ist vorliegend jeweils nur ein einzelner Gegenstand 12a-c gezeichnet, grundsätzlich ist aber auch denkbar, dass mehrere Gegenstände in einem Behälter 10a-c angeordnet werden. Man erkennt, dass die gezeichneten Gegenstände 12a-12c unterschiedlich sind. Die Kombination aus Behälter 10a-c und Gegenstand 12a-c definiert somit ein ganz bestimmtes Verpackungsszenario 14a-c. Dieses ist unter anderem gekennzeichnet durch eine bestimmte individuelle Größe und auch eine bestimmte individuelle Verteilung eines in der Figur gepunktet gezeichneten Leervolumens 16a-c in dem Behälter 10a-c, in dem der Gegenstand 12a-c angeordnet ist.

Beispielsweise über einen nicht dargestellten Sensor kann die Größe und Verteilung des Leervolumens 16a-c des spezifischen Verpackungsszenarios 14a-c einer Steuer- und Regeleinrichtung 18 mitgeteilt werden, was in Figur 1 durch jeweilige Pfeile 20a-c gekennzeichnet ist. Bei der Steuer-und Regeleinrichtung 18 kann es sich beispielsweise um einen üblichen PC handeln. Mittels der Steuer- und Regeleinrichtung 18 wird nun der Bedarf an Polstermittel ermittelt, welches erforderlich ist, um das für das jeweilige Verpackungsszenario 14a-c individuelle Leervolumen 16a-c so auszufüllen, dass der Gegenstand 12a-c ausreichend gegen ein Verrutschen in dem Behälter 10a-c gesichert ist, und auch ausreichend vor Beschädigungen durch von außen auf den Behälter 10a-c während des Transports einwirkende Kräfte geschützt ist.

Vorliegend sind, wie weiter unten noch stärker im Detail erläutert werden wird, Polsterkissen aus einem geknüllten Papiermaterial als Polstermittel vorgesehen. Von der Steuer- und Regeleinrichtung 18 wird nun für jedes einzelne der Verpackungsszenarien 14a-c ermittelt, wie viele Polsterkissen erforderlich sind, und welche Länge diese Polsterkissen haben müssen. Es wird also die Anzahl ermittelt, und es werden die Abmessungen ermittelt, oder, vereinfacht ausgedrückt, es wird insgesamt die erforderliche Menge an Polstermittel ermittelt.

Jedem Verpackungsszenario 14a-c wird die entsprechende Anzahl und werden die entsprechenden Abmessungen der Polsterkissen zugeordnet, und es wird für jedes Verpackungsszenario 14a-c ein Datensatz 19a-c geschaffen, der das jeweilige Verpackungsszenario 14a-c mit der Anzahl und den Abmessungen der Polsterkissen verknüpft, und diese Datensätze werden in einem Speicher 21 der Steuer- und Regeleinrichtung 18 abgespeichert. Dies alles geschieht vorliegend vorab, also außerhalb des regelmäßigen Verpackens von Gegenständen in entsprechenden Behältern.

Es versteht sich, dass auch andere Polstermittel als die erwähnten Polsterkissen eingesetzt werden können. Beispielsweise können als Polstermittel auch mit Luft gefüllte Beutel ("airbag"), mit einem expandierenden Schaum gefüllte Beutel ("foam bag") oder auch sogenanntes "loosefill" verwendet werden. Darüber hinaus muss die Erfassung eines Verpackungsszenarios 14a-c nicht unbedingt mittels eines Sensors erfolgen. Möglich ist auch, dass eine Person beispielsweise durch Ausprobieren den Bedarf an Polstermittel, also beispielsweise die Anzahl und die Abmessungen von Polsterkissen aus geknüllten Papier, für ein bestimmtes Verpackungsszenario 14a-c ermittelt und dies beispielsweise über eine nicht gezeichnete Tastatur der Steuer- und Regeleinrichtung 18 eingibt. Auf diese Weise würde der entsprechende Datensatz quasi "manuell" generiert werden.

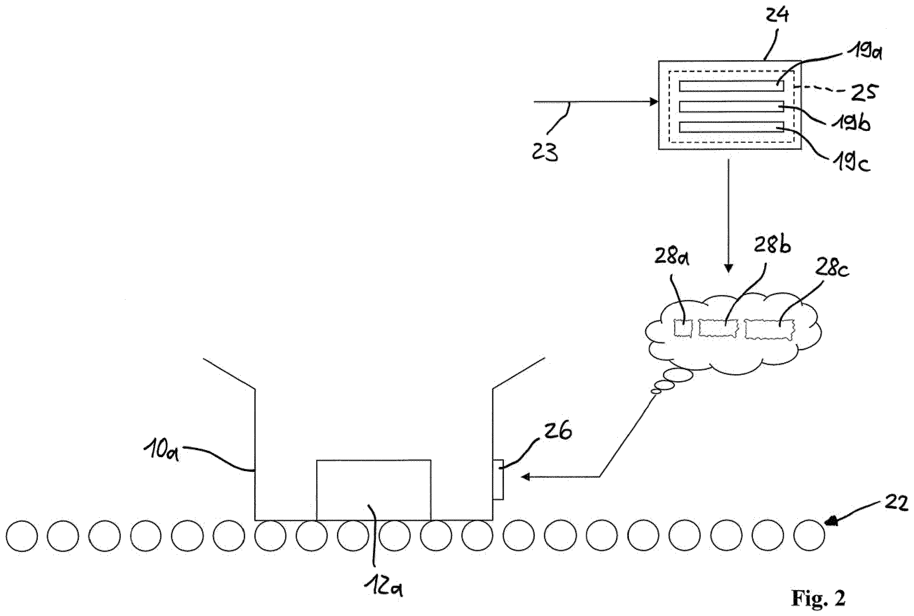

Ein regelmäßiges Verpacken von Gegenständen in Behältern wird nun unter Bezugnahme auf die Figuren 2-4 erläutert. Zunächst erkennt man aus Figur 2, dass ein Behälter 10a mit einem Gegenstand 12a auf einer Rollenbahn 22 transportiert wird. Von einer Person oder von einem Sensor (nicht gezeigt) wird nun ausgewertet, um welches Verpackungsszenario es sich handelt. Vorliegend handelt es sich um das Verpackungsszenario 14a. Dies wird einer Steuer-und Regeleinrichtung 24, bei der es sich wiederum um einen PC handeln kann, mitgeteilt (Pfeil 23). In einen Speicher 25 der Steuer- und Regeleinrichtung 24 sind zuvor die oben mittels der Steuer- und Regeleinrichtung 18 ermittelten Datensätze 19a-c, welche die einzelnen Verpackungsszenarien 14a-c betreffen, eingelesen worden.

Nachdem vorliegend festgestellt wurde, dass das Verpackungsszenario 12a vorliegt, wird von der Steuer- und Regeleinrichtung 24 ein maschinenlesbarer Informationsträger 26 erzeugt und von einer Person oder einer maschinellen Einrichtung auf dem Behälter 10a aufgebracht. Der maschinenlesbare Informationsträger 26 umfasst vorliegend ein selbstklebendes Etikett, welches mittels eines von der Steuer- und Regeleinrichtung 24 angesteuerten Druckers mit einem Barcode bedruckt wurde. Der Barcode enthält die Information über die Menge an Polstermittel, also die Anzahl und die Länge der für die Polsterung zu verwendenden Polsterkissen 28a, 28b und 28c, und ist der eigentliche Informationsträger. Diese Informationen wurden aus dem das Verpackungsszenario 12a betreffenden und in der Steuer- und Regeleinrichtung 24 abgespeicherten Datensatz 19a ausgelesen.

Es versteht sich, dass dann, wenn es sich um den Behälter 10b mit dem Gegenstand 12b, also das Verpackungsszenario 14b gehandelt hätte, der entsprechende Datensatz 19b ausgelesen worden wäre. Entsprechendes würde für das Verpackungsszenario 14c und jedes andere Verpackungsszenario gelten, dem in dem Speicher 25 ein entsprechender Datensatz zugeordnet ist. Ferner ist vorliegend zwar als Informationsträger ein Barcode genannt, grundsätzlich sind aber auch andere Informationsträger denkbar. Eine einfache Möglichkeit eines Informationsträgers ist beispielsweise ein RFID-Tag, welcher drahtlos mit den entsprechenden Informationen beschrieben werden kann, und welche beispielsweise einfach in den Behälter 10a eingelegt werden könnte.

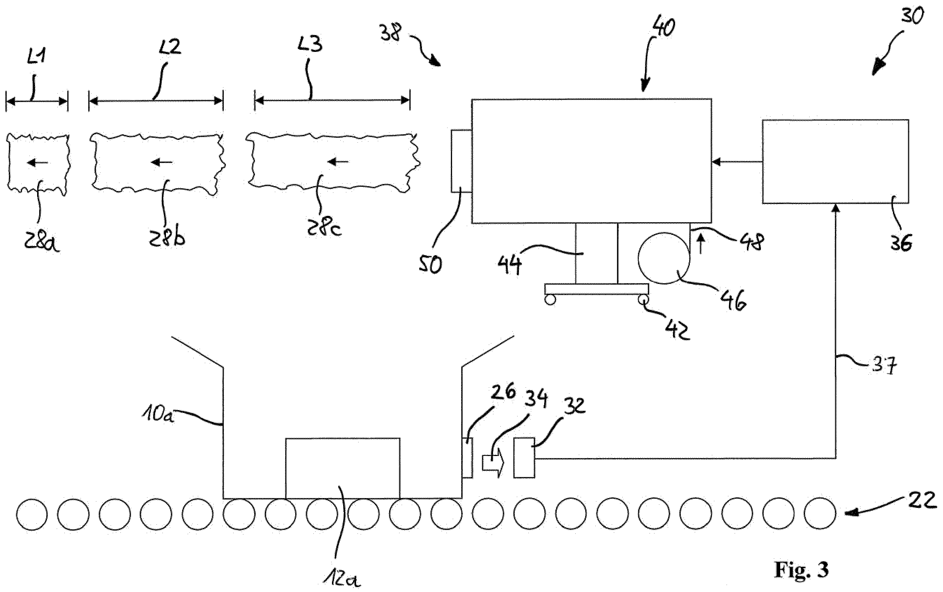

Über die Rollenbahn 22 wird der Behälter 10a weitertransportiert zu einer Station 30, in der das Polstermittel, vorliegend also die Polsterkissen 28a-c, bereitgestellt wird (Figur 3), und die insoweit eine Vorrichtung zum Polster des Gegenstands 12a in dem Behälter 10a bildet. Die Station 30 umfasst zunächst eine automatische Leseeinrichtung 32, mit der die auf dem Informationsträger 26 enthaltene Information ausgelesen werden kann. Dieser Vorgang ist durch einen Pfeil 34 in Figur 3 bezeichnet. Die automatische Leseeinrichtung 32 übermittelt ein Signal an eine Steuer- und Regeleinrichtung 36. Diese Übermittlung ist durch einen Pfeil 37 gekennzeichnet. Das übermittelte Signal basiert auf der von dem Informationsträger 26 durch die automatische Leseeinrichtung 32 ausgelesenen Information. Wie oben erwähnt wurde, handelt es sich bei dieser Information um die Anzahl und die Länge der bereitzustellenden Polsterkissen 28a-c.

Die Steuer- und Regeleinrichtung 36 gehört zu einer Polstermittel-Bereitstellungseinrichtung, welche insgesamt mit 38 bezeichnet ist. Ferner gehört zu dieser Polstermittel-Bereitstellungseinrichtung 38 eine Polsterumformungseinrichtung 40. Die Polstermittel-Bereitstellungseinrichtung 38 kann stationär sein, es kann sich aber auch um eine mobile Einrichtung handeln. Dies ist vorliegend dadurch angedeutet, dass die Polsterumformungseinrichtung 40 einen mittels Rollen 42 fahrbaren Ständer 44 umfasst.

Die Steuer- und Regeleinrichtung 36 steuert die Polsterumformungseinrichtung 40 so an, dass aus einem vorliegend auf einer Rolle 46 bevorratet bahnförmigen Papier-Ausgangsmaterial 48 durch maschinelles Knüllen die bereits oben erwähnten 3 Polsterkissen 28a, 28b und 28c erzeugt und auf diese Weise bereitgestellt werden (es versteht sich, dass das bahnförmige Papier-Ausgangsmaterial anstelle auf einer Rolle auch als Zickzack-gefalteter Stapel gelagert werden könnte). Diese Polsterkissen 28a-c unterscheiden sich durch ihre Länge, welche bei dem Polsterkissen 28a L1, bei dem Polsterkissen 28b L2 und bei dem Polsterkissen 28c L3 beträgt. Die Polsterkissen 28a-c werden von der Polsterumformungseinrichtung 40 aus einem Maschinenausgang 50 ausgegeben.

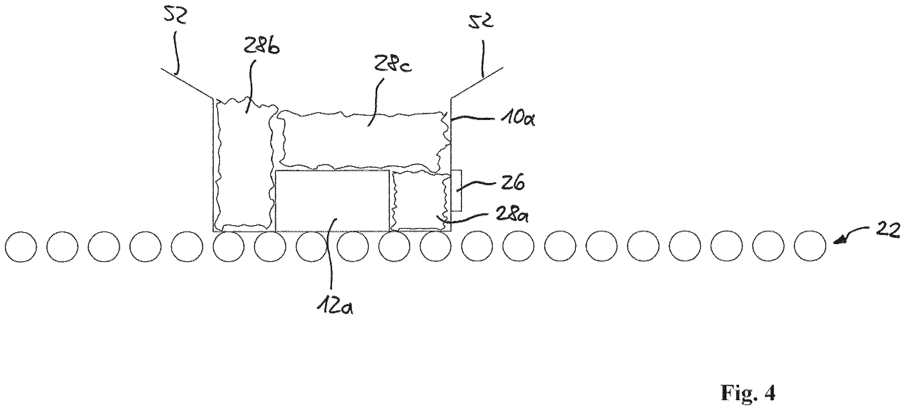

Eine Person nimmt nun die produzierten Polsterkissen 28a-c und platziert diese, wie in Figur 4 gezeigt ist, in dem Leervolumen 16a so, dass dieses ausreichend ausgefüllt ist und der Gegenstand 12a sowohl gegen ein Verrutschen als auch vor Beschädigungen durch von außen auf den Behälter 10a einwirkende Kräfte ausreichend geschützt ist. Der Behälter 10a kann nun durch Umklappen von Klappen 52 verschlossen und transportiert werden.

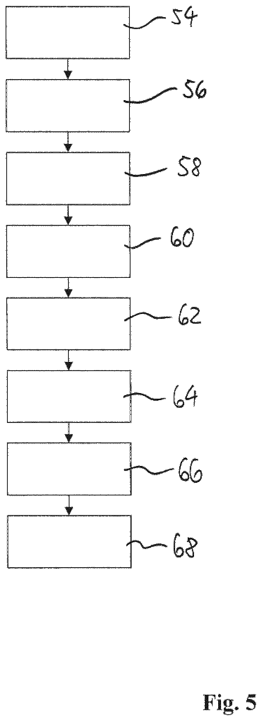

Unter Bezugnahme auf Figur 5 wird nun nochmals zusammenfassend das oben bereits im Zusammenhang mit den Figuren 1-4 beschriebene Verfahren zum Polstern des Gegenstands 12a in dem Behälter 10a erläutert.

Das Verfahren beginnt in einem Startblock 54. In 56 wird der maschinenlesbare Informationsträger 26 in Form des selbstklebenden Etiketts mit dem aufgedruckten Barcode erstellt. Der Barcode enthält die Information betreffend die vorab ermittelte Menge an Polsterkissen 28a-c für das Verpackungsszenario 14a. In 58 wird der maschinenlesbare Informationsträger 26 auf dem Behälter 10a aufgebracht. In 60 wird der Behälter 10a mit dem darin befindlichen Gegenstand 12a zu der automatischen Leseeinrichtung 32 transportiert. In 62 wird die auf dem Klebeetikett 46 enthaltene Information mittels der automatischen Leseeinrichtung 32 ausgelesen.

In 64 wird von der automatischen Leseeinrichtung 32 das Signal 37, welches auf der ausgelesenen Information basiert, an die Polstermittel-Bereitstellungseinrichtung 38 übermittelt. In 66 wird schließlich das Polstermittel in Form der drei Polsterkissen 28a-c durch die Polsterumformungsmaschine Richtung 40 basierend auf dem übermittelten Signal bereitgestellt. Das Verfahren endet in 68.

Wie oben mehrfach erwähnt, ist auf dem Informationsträger eine Information betreffend die Menge an Polstermittel, die zum Polstern eines Gegenstandes in einem Behälter erforderlich ist, gespeichert. Es versteht sich, dass auf dem Informationsträger auch noch weitere Informationen gespeichert sein können, beispielsweise betreffend die Art des Polstermittels und/oder das Material des Polstermittels, sowie weitere im Verlauf der weiteren Handhabung des Behälters wichtige bzw. sinnvolle Informationen.

## Patentansprüche

1. Ein Verfahren, welches umfasst:
a. Ermitteln eines einer Mehrzahl von mittels einer Mehrzahl von Datensätzen (19a-c) bereitgestellten Verpackungsszenarien (14a-c) in Abhängigkeit von einem in einem Behälter (10a) angeordneten Gegenstand (12a) und dem Behälter (10a), wobei ein jeweiliger der bereitgestellten Datensätze (19a-c) ein jeweiliges der Verpackungsszenarien (14a-14c), welches durch eine Kombination aus einem jeweiligen Behälter (10a; 10b; 10c) und zu verpackendem jeweiligen Gegenstand (12a; 12b; 12c) charakterisiert ist, mit einer Menge an Polstermittel (28a; 28b; 28c) verknüpft;
b. Ermitteln, mittels einer ersten Steuer- und Regeleinrichtung (24), einer der mittels der Datensätze bereitgestellten Informationen über die Menge an Polstermittel (28a; 28b; 28c) in Abhängigkeit von dem ermittelten der Mehrzahl der bereitgestellten Verpackungsszenarien (14a-c);
c. Erstellen, mittels der ersten Steuer- und Regeleinrichtung (24), eines maschinenlesbaren Informationsträgers (26), der die ermittelte Information über die Menge an Polstermittel (28a-c) enthält;
d. Aufbringen des maschinenlesbaren Informationsträgers (26) auf den Behälter (10a) mit dem darin angeordneten Gegenstand (12a);
e. Zuführen des Behälters (10a) mit dem darin befindlichen Gegenstand (12a) zu einer automatischen Leseeinrichtung (32) für den Informationsträger (26);
f. Auslesen der Information mittels der automatischen Leseeinrichtung (32);
g. Generieren, mittels der automatischen Leseeinrichtung (32), eines Signals (37), welches auf der ausgelesenen Information basiert; und Veranlassen, mittels einer zweiten Steuer-und Regeleinrichtung (36), die das Signal (37) von der automatischen Leseeinrichtung (32) erhält, einer Bereitstellung, mittels einer Polstermittel-Bereitstellungseinrichtung (38), der Menge des Polstermittels (28a-c) basierend auf dem Signal (37),
wobei das Ermitteln des einen der Verpackungsszenarien (14a-c) umfasst:
Bereitstellten von Verpackungsszenarien (14a-c), welche durch eine vorgegebene Kombination aus einem Behälter und einem Gegenstand charakterisiert sind, und
Auswerten, von einem Sensor, um welches Verpackungsszenario es sich handelt,
wobei dieses Verpackungsszenario der ersten Steuer-und Regeleinrichtung (24) mitgeteilt wird.

2. Das Verfahren nach Anspruch 1, **dadurch gekennzeichnet, dass** im Schritt d als Informationsträger ein Barcode erstellt und im Schritt f ein Barcode ausgelesen wird, oder dass im Schritt d die Information auf einen RFID-Tag gespeichert und im Schritt f der RFID-Tag ausgelesen wird.

3. Das Verfahren nach einem der vorhergehenden Ansprüche, **dadurch gekennzeichnet, dass** im Schritt h ein Polstermittel (28a-c) bestehend aus geknülltem Papier bereitgestellt wird.

4. Das Verfahren nach Anspruch 3, **dadurch gekennzeichnet, dass** im Schritt d die Menge an geknülltem Papier durch eine Anzahl und/oder eine Länge einzelner aus geknülltem Papier bestehender Polsterkissen (28a-c) definiert wird.

5. Das Verfahren nach Anspruch 4, **dadurch gekennzeichnet, dass** im Schritt h mindestens zwei Polsterkissen (28a-c) bereitgestellt werden, die unterschiedlich lang sind.

6. Eine Anordnung, welche umfasst:
a. einen Sensor zum Ermitteln eines einer Mehrzahl von mittels einer Mehrzahl von Datensätzen (19a-c) bereitgestellten Verpackungsszenarien (14a-c) in Abhängigkeit von einem in einem Behälter (10a) angeordneten Gegenstand (12a) und dem Behälter (10a), wobei dieses Verpackungsszenario einer ersten Steuer-und Regeleinrichtung (24) mitgeteilt wird, wobei ein jeweiliger der bereitgestellten Datensätze (19a-c) ein jeweiliges der Verpackungsszenarien (14a-14c), welches durch eine Kombination aus einem jeweiligen Behälter (10a; 10b; 10c) und zu verpackendem jeweiligen Gegenstand (12a; 12b; 12c) charakterisiert ist, mit einer Menge an Polstermittel (28a; 28b; 28c) verknüpft;
b. die erste Steuer- und Regeleinrichtung (24) zum Ermitteln einer der mittels der Datensätze (19a-c) bereitgestellten Informationen über die Menge an Polstermittel (28a; 28b; 28c) in Abhängigkeit von dem ermittelten der Mehrzahl der bereitgestellten Verpackungsszenarien (14a-c);
c. die erste Steuer- und Regeleinrichtung (24) zum Erstellen eines maschinenlesbaren Informationsträgers (26), der die ermittelte Information über die Menge an Polstermittel (28a-c) enthält;
d. eine maschinelle Einrichtung zum Aufbringen des maschinenlesbaren Informationsträgers (26) auf den Behälter (10a) mit dem darin angeordneten Gegenstand (12a);
e. eine automatische Leseeinrichtung (32) zum Auslesen der auf dem Behälter (10a) vorhandenen Information betreffend die vorab ermittelte Menge an Polstermittel (28a-c);
f. die automatische Leseeinrichtung (32) zum Generieren eines Signals (37), welches auf der ausgelesenen Information basiert;
g. eine zweite Steuer- und Regeleinrichtung (36), die das Signal (37) von der automatischen Leseeinrichtung (32) erhält, zum Veranlassen einer Bereitstellung, mittels einer Polstermittel-Bereitstellungseinrichtung (38), der Menge des Polstermittels (28a-c) basierend auf dem Signal (37).

7. Die Anordnung nach Anspruch 6, **dadurch gekennzeichnet, dass** die Polstermittel-Bereitstellungseinrichtung (38) eine Polsterumformungseinrichtung (40) umfasst, welche ein bahnförmiges Ausgangsmaterial (48) in geknüllte Polsterkissen (28a-c) umformt.

8. Die Anordnung nach einem der Ansprüche 6-7, **dadurch gekennzeichnet, dass** die automatische Leseeinrichtung (32) einen Barcode-Leser oder eine Einrichtung zum Auslesen eines RFID-Tags umfasst.

9. Die Anordnung nach einem der Ansprüche 6-8, **dadurch gekennzeichnet, dass** die Polstermittel-Bereitstellungseinrichtung (38) eine mobile Einrichtung ist.

## Claims

1. Method comprising:
a. determining one of a plurality of packaging scenarios (14a-c) provided by means of a plurality of data records (19a-c) on the basis of an object (12a) arranged in a container (10a) and the container (10a), one of the provided data records (19a-c) linking one of the packaging scenarios (14a-14c), which is **characterized by** a combination of a relevant container (10a; 10b; 10c) and a relevant object (12a; 12b; 12c) to be packaged, with an amount of cushioning material (28a; 28b; 28c);
b. determining, by means of a first control and regulating device (24), one of the items of information provided by means of the data records about the amount of cushioning material (28a; 28b; 28c) on the basis of the determined packaging scenario of the plurality of provided packaging scenarios (14a-c);
c. creating, by means of the first control and regulating device (24), a machine-readable information carrier (26) containing the determined item of information about the amount of cushioning material (28a-c);
d. attaching the machine-readable information carrier (26) to the container (10a) with the object (12a) arranged therein;
e. feeding the container (10a) with the object (12a) accommodated therein to an automatic reading device (32) for the information carrier (26);
f. reading out the item of information by means of the automatic reading device (32);
g. generating, by means of the automatic reading device (32), a signal (37) which is based on the read-out information; and
causing, by means of a second control and regulating device (36) which receives the signal (37) from the automatic reading device (32), the amount of the cushioning material (28a-c), which is based on the signal (37), to be provided by means of a cushioning material provision device (38),
the determination of one of the packaging scenarios (14a-c) comprising:
the provision of packaging scenarios (14a-c) which are **characterized by** a predetermined combination of a container and an object, and
the evaluation, by a sensor, of the packaging scenario in question,
this packaging scenario being communicated to the first control and regulating device (24).

2. Method according to claim 1, **characterized in that** in step d, a barcode is created as an information carrier and in step f, a barcode is read out or **in that** in step d, the item of information is stored on an RFID tag and in step f, the RFID tag is read out.

3. Method according to either of the preceding claims, **characterized in that** in step h, a cushioning material (28a-c) consisting of crumpled paper is provided.

4. Method according to claim 3, **characterized in that** in step d, the amount of crumpled paper is defined by a number and/or a length of individual cushion pads (28a-c) consisting of crumpled paper.

5. Method according to claim 4, **characterized in that** in step h, at least two cushion pads (28a-c) are provided, which are of different lengths.

6. Arrangement comprising:
a. a sensor for determining one of a plurality of packaging scenarios (14a-c) provided by means of a plurality of data records (19a-c) on the basis of an object (12a) arranged in a container (10a) and the container (10a), this packaging scenario being communicated to a first control and regulating device (24), one of the provided data records (19a-c) linking one of the packaging scenarios (14a-14c), which is **characterized by** a combination of a relevant container (10a; 10b; 10c) and a relevant object (12a; 12b; 12c) to be packaged, with an amount of cushioning material (28a; 28b; 28c);
b. the first control and regulating device (24) for determining one of the items of information provided by means of the data records (19a-c) about the amount of cushioning material (28a; 28b; 28c) on the basis of the determined packaging scenario of the plurality of provided packaging scenarios (14a-c);
c. the first control and regulating device (24) for creating a machine-readable information carrier (26) containing the determined item of information about the amount of cushioning material (28a-c);
d. a machine device for attaching the machine-readable information carrier (26) to the container (10a) with the object (12a) arranged therein;
e. an automatic reading device (32) for reading out the item of information present on the container (10a), relating to the amount of cushioning material (28a-c) determined in advance;
f. the automatic reading device (32) for generating a signal (37) which is based on the read-out item of information;
g. a second control and regulating device (36), which receives the signal (37) from the automatic reading device (32), for causing the amount of the cushioning material (28a-c), which is based on the signal (37), to be provided by means of a cushioning material provision device (38).

7. Arrangement according to claim 6, **characterized in that** the cushioning material provision device (38) comprises a cushion reshaping device (40) which reshapes a web-shaped starting material (48) into crumpled cushion pads (28a-c).

8. Arrangement according to any of claims 6 to 7, **characterized in that** the automatic reading device (32) comprises a barcode reader or a device for reading out an RFID tag.

9. Arrangement according to any of claims 6 to 8, **characterized in that** the cushioning material provision device (38) is a mobile device.

## Revendications

1. Procédé, qui comprend les étapes consistant à:
a. déterminer l'un d'une pluralité de scénarios de conditionnement (14a-c) fournis au moyen d'une pluralité d'ensembles de données (19a-c) en fonction d'un objet (12a) disposé dans un contenant (10a) et du contenant (10a), dans lequel l'un respectif des ensembles de données (19a-c) fournis associe l'un respectif des scénarios de conditionnement (14a-14c), qui est **caractérisé par** une combinaison d'un contenant respectif (10a; 10b; 10c) et d'un objet respectif (12a; 12b; 12c) à conditionner, à une quantité de produit de rembourrage (28a; 28b; 28c);
b. déterminer, au moyen d'un premier dispositif de commande et de régulation (24), l'une des informations sur la quantité de produit de rembourrage (28a; 28b; 28c) fournies au moyen des jeux de données, en fonction de la détermination de la pluralité des scénarios de conditionnement (14a-c) fournis;
c. établir, au moyen du premier dispositif de commande et de régulation (24), un support d'information lisible par machine (26) qui contient l'information déterminée sur la quantité de produit de rembourrage (28a-c) ;
d. appliquer le support d'information lisible par machine (26) sur le contenant (10a) avec l'objet (12a) disposé dans celui-ci;
e. acheminer le contenant (10a) avec l'objet (12a) qui s'y trouve vers un dispositif de lecture automatique (32) pour le support d'information (26);
f. lire l'information au moyen du dispositif de lecture automatique (32);
g. générer, au moyen du dispositif de lecture automatique (32), un signal (37) qui est basé sur l'information lue; et provoquer, au moyen d'un second dispositif de commande et de régulation (36) qui reçoit le signal (37) à partir du dispositif de lecture automatique (32), une fourniture, au moyen d'un dispositif de fourniture de produit de rembourrage (38), de la quantité de produit de rembourrage (28a-c) sur la base du signal (37),
dans lequel la détermination de l'un des scénarios de conditionnement (14a-c) comprend les étapes consistant à:
fournir des scénarios de conditionnement (14a-c), qui comprend :
fournir des scénarios de conditionnement (14a-c) qui sont **caractérisés par** une combinaison prédéterminée d'un contenant et d'un objet, et
évaluer, à partir d'un capteur, de quel scénario de conditionnement il s'agit,
dans lequel ce scénario de conditionnement est communiqué au premier dispositif de commande et de régulation (24).

2. Procédé selon la revendication 1, **caractérisé en ce qu'**à l'étape d, un code à barres est créé en tant que support d'information et à l'étape f, un code à barres est lu, ou **en ce qu'**à l'étape d, l'information est mémorisée sur une étiquette RFID et à l'étape f, l'étiquette RFID est lue.

3. Procédé selon l'une quelconque des revendications précédentes, **caractérisé en ce qu'**à l'étape h, un produit de rembourrage (28a-c) constitué de papier froissé est fourni.

4. Procédé selon la revendication 3, **caractérisé en ce qu'**à l'étape d, la quantité de papier froissé est définie par un nombre et/ou une longueur de coussinets de rembourrage individuels constitués de papier froissé (28a-c).

5. Procédé selon la revendication 4, **caractérisé en ce qu'**à l'étape h, au moins deux coussinets de rembourrage (28a-c) de longueurs différentes sont fournis.

6. Agencement comprenant:
a. un capteur pour détecter l'un d'une pluralité de scénarios de conditionnement (14a-c) fournis au moyen d'une pluralité d'ensembles de données (19a-c) en fonction d'un objet (12a) disposé dans un contenant (10a) et du contenant (10a), dans lequel ce scénario de conditionnement est communiqué à un premier dispositif de commande et de régulation (24), dans lequel 'un respectif des ensembles de données (19a-c) fournis associé l'un respectif des scénarios de conditionnement (14a-14c), **caractérisé par** une combinaison d'un contenant respectif (10a; 10b; 10c) et d'un objet respectif (12a; 12b; 12c) à conditionner, à une quantité de produit de rembourrage (28a; 28b; 28c);
b. le premier dispositif de commande et de régulation (24) pour déterminer l'une des informations sur la quantité de produit de rembourrage (28a; 28b; 28c) fournies au moyen des ensemble de données (19a-c) en fonction du scénario de conditionnement (14a-c) déterminé de la pluralité de scénarios de conditionnement fournis;
c. le premier dispositif de commande et de régulation (24) pour la fourniture d'un support d'information (26) lisible par machine, contenant l'information déterminée sur la quantité de produit de rembourrage (28a-c) ;
d. un dispositif mécanique pour l'application du support d'information lisible par machine (26) sur le contenant (10a) avec l'objet (12a) qui y est disposé;
e. un dispositif de lecture automatique (32) pour lire les informations présentes sur le contenant (10a) concernant la quantité de produit de rembourrage (28a-c) déterminée au préalable;
f. le dispositif de lecture automatique (32) pour générer un signal (37) qui est basé sur les informations lues;
g. un second dispositif de commande et de régulation (36), qui reçoit le signal (37) à partir du dispositif de lecture automatique (32), pour provoquer une mise à disposition, au moyen d'un dispositif de fourniture de produit de rembourrage (38), de la quantité de produit de rembourrage (28a-c) sur la base du signal (37).

7. Agencement selon la revendication 6, **caractérisé en ce que** le dispositif de fourniture de produit de rembourrage (38) comprend un dispositif de formage de produit de rembourrage (40) qui transforme un matériau de départ en forme de bande (48) en coussinets de produit de rembourrage (28a-c) en papier froissé.

8. Agencement selon l'une quelconque des revendications 6 à 7, **caractérisé en ce que** le dispositif de lecture automatique (32) comprend un lecteur de code à barres ou un dispositif de lecture d'une étiquette RFID.

9. Agencement selon l'une quelconque des revendications 6 à 8, **caractérisé en ce que** le dispositif de fourniture de produit de rembourrage (38) est un dispositif mobile.
